# EUROPEAN PATENT SPECIFICATION

(11) **EP 2 865 881 B1**
(45) Date of publication and mention of the grant of the patent: **03.01.2018**
(21) Application number: 14184754.1
(22) Date of filing: 15.09.2014
(51) Int. Cl.: F02N 11/08, B60W 30/192, F15B 1/02, F01M 5/02

(54) **Arrangement in connection with a stop/start system**
Anordnung im Zusammenhang mit einem Stopp/Start-System
Agencement relatif à un système de démarrage/arrêt

(30) Priority: 16.09.2013 SE 1351059
(43) Date of publication of application: 29.04.2015
(73) Proprietor: Scania CV AB, 151 87 Södertälje (SE)
(72) Inventor: Hammarberg, Göran, 64551 Strängnäs (SE)
(74) Representative: Scania CV AB

(56) References cited:
- CN-Y- 201 218 118
- DE-A1- 3 835 561
- JP-A- H11 182 222
- US-A- 5 589 059
- US-A- 6 148 789
- US-A1- 2010 284 823
- US-A1- 2011 118 963

## Description

### Field of the invention

The present invention concerns an arrangement according to the preamble to the independent claim.

### Background of the invention

For environmental and fuel-cost reasons, demand for so-called stop/start systems is increasing, including in heavy vehicles. Cars currently have them, and they are in demand for heavy vehicles mainly in city traffic (city buses and vans) to prevent idling in cities and thereby save fuel and [reduce] exhaust emissions and noise.

In cars, the stop/start system turns off and restarts the engine in order to reduce idling and thereby decrease fuel consumption and emissions. A number of conditions determine whether the engine is to be turned off, such as the vehicle is standing still, is braked and no activation of the accelerator is occurring. When the accelerator is depressed again, the engine starts again.

When a hot engine is stopped, the lubricating oil is well heated and has low viscosity. This means that the lubricating oil will quickly run out of the so-called sliding bearings that are used almost everywhere in a heavy engine, e.g. in connection with the crankshaft, connecting rods and camshaft. At the next start, which can occur anywhere from several seconds after the stop to several minutes after the stop, there is then a high risk that metal-to-metal contact will occur in the sliding bearings. Metal-to-metal contact entails abrasive wear and incipient unstable conditions in the affected sliding bearing, i.e. additional and more rapid wear becomes increasingly likely. It is also more likely that these problems will be more pronounced in a large engine for heavy traffic than in a car engine, since the forces are greater and the bearings wider (leading to a risk of so-called contact adhesion).

US-2011/0118963 describes a stop/start system for a vehicle comprising a hydraulic pump and a valve. In connection with a start, the pump and valve are acted upon in such a way that a hydraulic medium at sufficient pressure is applied to achieve a mechanical engagement in the gearbox.

US-5589059 describes an adapter for installation on an automobile engine in lieu of a disposable cartridge filter. The system includes an oil reservoir which accumulates oil under pressure which is stored until engine starting. US-6148789 describes an engine-pressurized prestart oiler for an engine having pressure lubrication, which rapidly lubricates critical engine bearing surfaces.

US-2010/0284823 describes a system for controlling oil pressure in an engine with a start-stop function, comprising an oil accumulator according to the preamble of claim 1. The object of the present invention is to reduce bearing wear in connection with moving parts in an engine, such as the engine sliding bearings, in connection with the use of the stop/start function, and to thereby safeguard the long-term function of the engine.

### Summary of the invention

The aforementioned objects are achieved by means of the invention defined by the independent claim.

Preferred embodiments are defined by the non-independent claims.

According to the invention, a pressure accumulator is arranged that is connected, via an actuated shut-off valve, to the engine lubricant oil system at a suitable location between the lubricating oil pump and the engine bearings, e.g. sliding bearings.
a) When the engine is running, the shut-off valve must be open. This means that the lubricating oil in the pressure accumulator will exhibit the same pressure as in the engine.
b) When a stop signal is sent to the engine, the shut-off valve must be closed. The pressure of the oil in the engine at the moment of the stop will prevail in the pressure accumulator.
c) When a start signal is sent to the engine, e.g. to the engine starter motor, the shut-off valve must be opened and then kept open as per Item a). In connection with a start, the oil in the pressure accumulator will then be pressed into the engine, ensuring lubrication of the bearings. This occurs in direct connection with the start, and before the lubricating oil pump is able to pump oil to the engine. It may be relevant to incorporate a short delay before the start signal is sent to the starter motor so as to ensure that the oil reaches the bearings.

A pressure accumulator has a function similar to those used in pressure tanks (pressure vessels), but adapted for hot oil. An appropriate accumulator volume is determined based in part on engine size and oil pressure.

The purpose of the pressure accumulator is thus to maintain the pressure that prevails when the engine is in operation, and to be able to rapidly restore that pressure when the engine is to be restarted following a stop period.

### Brief description of drawings

Figure 1 is a schematic illustration of an engine in which the arrangement according to the invention is being applied.
Figure 2 is a schematic illustration of the arrangement according to the invention when the engine is in operation.
Figure 3 is a schematic illustration of the arrangement according to the invention when the engine is stopped.
Figure 4 is a schematic illustration of the arrangement according to the invention just as the engine is being started.

### Detailed description of preferred embodiments of the invention

The invention will now be described in detail with reference to the accompanying drawings.

In the figures, the same or similar parts have been given the same reference designation throughout.

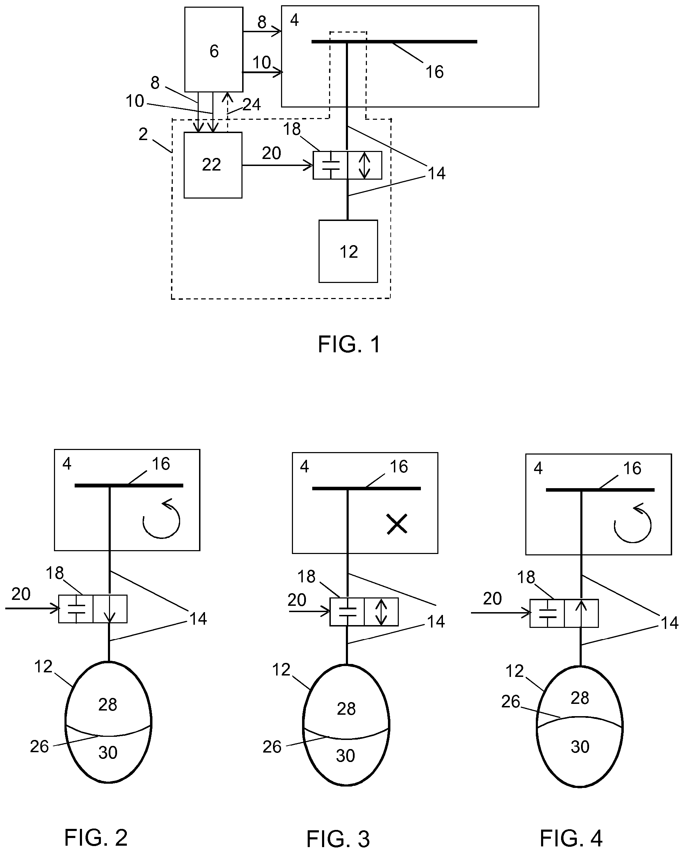

First, with reference to the schematic illustration in Figure 1, there is shown an arrangement 2 in connection with an engine 4, which can be a combustion engine or an electric motor, for a vehicle equipped with a start/stop system 6 that allows the engine 4 to start and stop in dependence upon a respective start or stop signal 8,10 when predetermined conditions are fulfilled.

These conditions include, for example, the position of the accelerator, the position of the clutch pedal, the movement of the vehicle, etc. One skilled in the art will be familiar with a number of different variants that exist for determining when the vehicle engine is to be turned off and started, and this aspect will consequently not be discussed further here. The start signal 8 is applied, for example, to the engine starter motor in connection with a start.

The arrangement comprises at least one pressure accumulator 12 connected via at least one connection 14 to the engine oil system 16.

The connection 14 is equipped with a shut-off valve 18 that is adapted so as to be in an open position in which oil can flow in both directions between the engine oil system 16 and said pressure accumulator 12, or in a closed position in which the oil is prevented from flowing through the valve 18. The connection 14 can consist of a pipe connection, a duct in the engine block, or a combination thereof.

The position of the shut-off valve 18 is adapted so as to be controlled by a valve control signal 20, so that the valve 18 will transition to its open position in dependence upon the generation of a start signal 8 by said stop/start system 6, and transition to its closed position in dependence upon the generation of a stop signal 10 by said stop/start system 6. The valve control signal 20 is an electric signal, a pneumatic signal or a hydraulic signal. It may be relevant to incorporate a short delay between the opening of the valve and the signal to the starter motor so as to ensure that oil has reached the bearings.

The shut-off valve 18 is thus a controllable valve that can assume two positions, and can preferably comprise a slide that can be inserted into a valve housing between two positions in dependence upon the valve control signal. In the open position the slide reveals an opening that enables oil to flow in both directions in the connection 14 while, in the closed position, the slide constitutes a seal that prevents oil from passing.

According to one embodiment, the connection 14 is connected to a main oil duct in the engine oil system 16 upstream of a lubricating oil pump (not shown).

The shut-off valve 18 is thus in its open position during normal operation of the engine 4, which means that the pressure of the oil in the pressure reservoir 12 is then the same as in the engine oil system.

And the shut-off valve 18 is in its closed position when the engine 4 is turned off, which means that the pressure of the oil in the pressure reservoir 12 is the same as the pressure that prevailed in the engine oil system 16 when the shut-off valve 18 was closed.

The arrangement further comprises a valve control unit 22 adapted so as to generate said valve control signal 20 in dependence upon said respective start or stop signal 8, 10. The valve control unit 22 can at least partly be implemented in the existing control systems of the vehicle, but can also constitute a separate unit that comprises a microprocessor for implementing the rules that govern the generation of the valve control signal.

According to one embodiment, the shut-off valve 18 is, in connection with an engine start, adapted so as to be opened and then given a predetermined time interval before a signal is sent to the starter motor and the engine starts. Said predetermined time interval can vary extensively depending on the embodiment and engine size, and can preferably fall in the range of 0-2 seconds.

In practice this is achieved by delaying the start of the engine by said time interval when the signal arrives for the engine to start, e.g. in that the driver depresses the accelerator. This can be achieved, for example, in that the valve control unit 22 issues a delay signal 24 to the start/stop system 6, with the result that the start signal 8 is generated for the engine after a delay. Allowing the valve 18 to open before the engine is started ensures that the pressurized oil from the pressure accumulator has had time to flow into the oil system before the engine is started and thus to lubricate, for example, the engine bearings.

It is also possible to allow an oil pressure sensor in the main oil duct to sense the oil pressure and, when the oil pressure exceeds a predetermined pressure level after the shut-off valve 18 has been opened, to generate the start signal to the engine so as to start the engine.

A delay of the turning off of the engine can be carried out in corresponding fashion. This is achieved in that the valve control unit generates a valve control signal when a stop signal is detected and issues a delay signal 24 for the start/stop system 6, which results in the stop signal 10 being issued to the engine after a delay of the same order of magnitude as above. The pressure that prevails in the oil system, and in the pressure accumulator, will thus certainly prevail in the pressure accumulator when the valve is closed.

The design of the pressure accumulator is naturally dependent upon the volumes exhibited by the engine oil system, and by the pressures and flows that are present there. The lubricating oil pump pumps oil to the main oil duct of the engine, and thence to bearings in the engine. The pressure of the oil during operation for a heavy goods vehicle can be up to 5 bars.

The pressure accumulator 12 is adapted for the pressures that the engine lubricating oil normally exhibits, and preferably adapted for pressures of up to, for example, 7 bars.

In an application for heavier vehicles, the pressure accumulator 12 is adapted so as to hold a volume of oil that is preferably 1.0 - 3.0 liters.

The pressure accumulator can, for example, be a container with a rubber membrane 26 (see Figures 2-4) that divides the container into two parts, wherein air is present in the one part 30 and oil in the other 28. The membrane bulges into the air portion as the oil pressure increases; cf. the function of a so-called hydropress pressure capsule.

Automatic pressure devices of the pressure tank type may also be applicable.

According to one embodiment the pressure accumulator 12 is integrated into the engine block, which is advantageous in that no additional external units are needed. The advantage is that the connection to the main oil duct can be arranged easily.

Alternatively, the pressure accumulator and the shut-off valves constitute external units.

The function of the arrangement will now be described with reference to Figures 2-4.

Figure 2 shows the situation during normal engine operation, i.e. the engine is running, as is indicated by a rotated arrow. The shut-off valve 18 is open, which means that the pressure of the oil in the pressure accumulator is the same as in the engine oil system. The figure shows a rubber membrane 26 in the pressure accumulator, which membrane is bulging downward because of the pressure.

Figure 3 shows the situation when the engine is stopped, e.g. in anticipation of a red light. The engine was stopped in dependence upon a stop signal that was generated when predetermined conditions were fulfilled. This caused a valve control signal 20 to be generated and closed the valve 18. The pressure in the pressure accumulator is now the same as the pressure that prevailed in the oil system when the engine was running.

Figure 4 shows the situation just as the shut-off valve is being opened, the engine is being started, and oil has flowed out from the pressure accumulator because of the pressure difference that exists between the pressure of the oil in the pressure accumulator in the chamber 28 and in the oil system. The rubber membrane 26 is bulging upward because the pressure in the lower chamber 30 of the pressure accumulator is greater than in the chamber 28. After a while the pressure in the pressure accumulator will increase again, and the situation shown in Figure 2 will come to prevail.

The type of accumulator that is schematically illustrated in Figures 2-4 is of the hydropress type. It is also possible to use pressure accumulators of other types. A pressure accumulator is a pressure vessel that serves to store pressurized liquid.

The present invention is not limited to the preferred embodiments described above. Various alternatives, modifications and equivalents may be used. The embodiments above are consequently not to be viewed as limitative of the protective scope of the invention, which is defined in the accompanying claims.

## Claims

1. An arrangement (2) in connection with an engine (4) for a vehicle equipped with a stop/start system (6) that enables the engine (4) to start and stop in dependence upon a respective start or stop signal (8, 10) when predetermined conditions are fulfilled, comprising at least one pressure accumulator (12) connected via at least one connection (14) to the engine oil system (16) and in that the connection (14) is equipped with a shut-off valve (18), wherein the shut-off valve (18) is adapted so as to be in an open position in which oil can flow in both directions between the engine oil system (16) and said pressure accumulator (12), or in a closed position in which oil is prevented from flowing through the valve (18), and wherein the position of the shut-off valve (18) is adapted so as to be controlled by a valve control signal (20), so that the valve (18) transitions to the open position in dependence upon the generation of a start signal (8) by said stop/start system (6), and **characterized in that** the valve (18) transitions to the closed position in dependence upon the generation of a stop signal (10) by said stop/start system (6), wherein the shut-off valve (18) is in its open position during normal operation of the engine (4), and the pressure of the oil in the pressure reservoir (12) is the same as in the engine oil system, and wherein the shut-off valve (18) is in its closed position when the engine (4) is shut off, and the pressure of the oil in the pressure reservoir (12) is the same as the pressure that prevailed in the engine oil system (16) when the shut-off valve (18) was closed.

2. The arrangement (2) according to claim 1, wherein the arrangement comprises a valve control unit (22) adapted so as to generate said valve control signal (20) in dependence upon said respective start or stop signal (8, 10).

3. The arrangement (2) according to any of claims 1-2, wherein said shut-off valve (18) is adapted so as to be opened a predetermined time interval before the engine starts.

4. The arrangement (2) according to claim 3, wherein said predetermined time interval is adapted for the engine in question.

5. The arrangement (2) according to any of claims 1-4, wherein said pressure accumulator (12) is adapted for the lubricating oil pressure level of the engine.

6. The arrangement (2) according to any of claims 1-5, wherein said pressure accumulator (12) is adapted so as to hold a suitable volume of oil.

7. The arrangement (2) according to any of claims 1-6, wherein said pressure accumulator (12) is integrated into the engine block.

## Patentansprüche

1. Anordnung (2) in Verbindung mit einem Verbrennungsmotor (4) für ein Fahrzeug, das mit einem Stopp-/Start-System (6) ausgerüstet ist, wobei der Verbrennungsmotor (4) in Abhängigkeit von einem entsprechenden Start- oder Stopp-Signal (8, 10) starten oder stoppen kann, wenn vorgegebene Bedingungen erfüllt sind, wobei die Anordnung mindestens einen Druckspeicher (12) aufweist, der über mindestens eine Verbindung (14) mit dem Ölsystem (16) des Verbrennungsmotors verbunden ist, wobei die Verbindung (14) mit einem Absperrventil (18) ausgerüstet ist, wobei das Absperrventil (18) so eingerichtet ist, dass es sich in einer offenen Position befindet, in der Öl in beiden Richtungen zwischen dem Motorölsystem (16) und dem Druckspeicher (12) fließen kann, und in einer geschlossenen Position, in der ein Ölfluss durch das Ventil (18) verhindert wird, und wobei die Position des Absperrventils (18) von einem Ventil-Steuersignal (20) gesteuert wird, so dass das Ventil (18) in Abhängigkeit von der Erzeugung eines Start-Signals (8) durch das Stopp-/Start-System (6) in die offene Position übergeht,
**dadurch gekennzeichnet, dass** das Ventil (18) in Abhängigkeit von der Erzeugung eines Stopp-Signals (10) durch das Stopp-/Start-System (6) in die geschlossene Position übergeht, wobei sich das Absperrventil (18) während des Normalbetriebs des Verbrennungsmotors (4) in der offenen Position befindet, und der Öldruck im Druckspeicher (12) gleich ist dem Druck im Motorölsystem, und wobei sich das Absperrventil (18) in der geschlossenen Position befindet, wenn der Verbrennungsmotor (4) abgeschaltet ist und der Öldruck im Druckspeicher (12) gleich ist dem Druck, der im Motorölsystem (16) vorherrschte, als das Absperrventil (18) geschlossen war.

2. Anordnung (2) nach Anspruch 1, wobei die Anordnung eine Ventilsteuereinheit (22) aufweist, die zum Erzeugen des Ventil-Steuersignals (20) in Abhängigkeit vom entsprechenden Start- oder Stopp-Signal (8, 10) eingerichtet ist.

3. Anordnung (2) nach einem der Ansprüche 1 bis 2, wobei das Absperrventil (18) so eingerichtet ist, dass es in einem vorgegebenen Zeitintervall vor dem Start des Verbrennungsmotors geöffnet wird.

4. Anordnung (2) nach Anspruch 3, wobei das vorgegebene Zeitintervall auf den betreffenden Verbrennungsmotor abgestimmt ist.

5. Anordnung (2) nach einem der Ansprüche 1 bis 4, wobei der Druckspeicher (12) auf den Schmieröldruckpegel des Verbrennungsmotors abgestimmt ist.

6. Anordnung (2) nach einem der Ansprüche 1 bis 5, wobei der Druckspeicher (12) zur Aufnahme eines geeigneten Ölvolumens eingerichtet ist.

7. Anordnung (2) nach einem der Ansprüche 1 bis 6, wobei der Druckspeicher (12) im Motorblock integriert ist.

## Revendications

1. Agencement (2) relatif à un moteur (4) pour un véhicule équipé d'un système de démarrage/arrêt (6) qui permet le démarrage et l'arrêt du moteur (4) en fonction d'un signal de démarrage ou arrêt (8, 10) respectif lorsque des conditions prédéterminées sont remplies, comprenant au moins un accumulateur de pression (12) relié via au moins un raccord (14) au système de lubrification moteur (16), le raccord (14) étant équipé d'une soupape d'arrêt (18), la soupape d'arrêt (18) étant adaptée pour être en position ouverte dans laquelle l'huile peut s'écouler dans les deux directions entre le système de lubrification moteur (16) et ledit accumulateur de pression (12), ou en position fermée empêchant l'huile de s'écouler à travers la soupape (18), et la position de la soupape d'arrêt (18) étant adaptée pour être commandée par un signal de commande de soupape (20) de sorte que la soupape (18) passe en position ouverte en fonction de l'émission d'un signal de démarrage (8) par ledit système de démarrage/arrêt (6),
**caractérisé en ce que**
la soupape (18) passe en position fermée en fonction de l'émission d'un signal d'arrêt (10) par ledit système de démarrage/arrêt (6), la soupape d'arrêt (18) étant en position ouverte pendant le fonctionnement normal du moteur (4), et la pression de l'huile dans le réservoir sous pression (12) étant la même que dans le système de lubrification du moteur, et la soupape d'arrêt (18) étant en position fermée lorsque le moteur (4) est à l'arrêt et que la pression de l'huile dans le réservoir sous pression (12) est égale à la pression qui prévalait dans le système de lubrification moteur (16) lorsque la soupape d'arrêt (18) était fermée.

2. Agencement (2) selon la revendication 1, dans lequel l'agencement comprend une unité de commande de soupape (22) adaptée pour générer ledit signal de commande de soupape (20) en fonction dudit signal de démarrage ou arrêt (8, 10) respectif.

3. Agencement (2) selon l'une quelconque des revendications là 2, dans lequel ladite soupape d'arrêt (18) est adaptée pour être ouverte un laps de temps prédéterminé avant le démarrage du moteur.

4. Agencement (2) selon la revendication 3, dans lequel le laps de temps prédéterminé est adapté pour le moteur concerné.

5. Agencement (2) selon l'une quelconque des revendications 1 à 4, dans lequel ledit accumulateur de pression (12) est adapté pour le niveau de pression d'huile de lubrification du moteur.

6. Agencement (2) selon l'une quelconque des revendications 1 à 5, dans lequel ledit accumulateur de pression (12) est adapté pour contenir un volume d'huile approprié.

7. Agencement (2) selon l'une quelconque des revendications 1 à 6, dans lequel ledit accumulateur de pression (12) est intégré dans le bloc moteur.
